(19) **Europäisches Patentamt European Patent Office Office européen des brevets**

(11) **EP 4 607 440 A1**

(12) **EUROPEAN PATENT APPLICATION**
published in accordance with Art. 153(4) EPC

(43) Date of publication:
**27.08.2025 Bulletin 2025/35**

(21) Application number: **23879422.6**

(22) Date of filing: **27.07.2023**

(51) International Patent Classification (IPC):
**G06Q 50/02** (2024.01)    **A01G 7/00** (2006.01)
**G06Q 10/04** (2023.01)

(52) Cooperative Patent Classification (CPC):
**A01G 7/00; G06Q 10/04; G06Q 50/02**

(86) International application number:
**PCT/JP2023/027644**

(87) International publication number:
**WO 2024/084769 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2022  JP 2022168386**

(71) Applicant: **National Agriculture and Food
Research
Organization
Tsukuba-shi, Ibaraki 305-8517 (JP)**

(72) Inventors:
• **ODA, Atsushi
  Tsukuba-shi, Ibaraki 305-8519 (JP)**
• **SUGIYAMA, Tomomi
  Tsukuba-shi, Ibaraki 305-8519 (JP)**
• **ISOZAKI, Masahide
  Tsukuba-shi, Ibaraki 305-8519 (JP)**
• **HIGASHIDE, Tadahisa
  Tsukuba-shi, Ibaraki 305-8519 (JP)**

(74) Representative: **Haseltine Lake Kempner LLP
Cheapside House
138 Cheapside
London EC2V 6BJ (GB)**

(54) **PREDICTION METHOD AND PREDICTION PROGRAM, ENVIRONMENTAL CONTROL INFORMATION OUTPUT METHOD AND ENVIRONMENTAL CONTROL INFORMATION OUTPUT PROGRAM**

(57)    To accurately predict a sugar content and a weight of a fruit vegetable, a prediction method, a computer executes process including acquiring actual measurement values or prediction values of a cumulative solar radiation amount and a daily average carbon dioxide concentration in each of a plurality of stages acquired by dividing a cultivation period from flowering to a time when a fruit is able to be harvested in a fruit vegetable, calculating a first index related to a sugar content or a weight of the fruit in each of the plurality of stages, based on the cumulative solar radiation amount and the daily average carbon dioxide concentration in each of the plurality of stages, acquiring each product of the first index of each of the plurality of stages and a weight coefficient determined for each variety of the fruit vegetable and for each of the stages, and predicting the sugar content or the weight of the fruit based on a value acquired by integrating the products.

EP 4 607 440 A1

FIG. 6

**Description**

[TECHNICAL FIELD]

The present invention relates to a prediction method, a prediction program, an environmental control information output method, and an environmental control information output program.

[BACKGROUND ART]

For consumers who purchase fruit vegetables (for example, strawberries and tomatoes), the sugar content and weight of fruits are important. Therefore, if the producers of fruit and vegetables can ship fruits with the sugar content and the fruit weight required by many consumers, they can trade at a high price and increase profits. Therefore, producers have conventionally produced fruits with a high sugar content by applying an appropriate salt stress or produced fruits with an appropriate weight by adjusting the amount of irrigation water based on long-term experience and intuition.

In contrast, in recent years, a technique has been known in which an appropriate fertilizer concentration, an appropriate amount of nutrient solution to be supplied, and an appropriate number of times of supply are output based on a predicted sugar content and a target sugar content, thereby automating cultivation without depending on the skill of a producer (see Patent Document 1 and the like). Further, a technique is known in which accumulated water stress and cumulative temperature are controlled in order to harvest crops having optimal quality and color (see Patent Document 2 and the like). Further, a technique is also known in which the influence of the solar radiation amount on the sugar content of crops is predicted, and the environment is controlled based on the relationship between the sugar content and the air temperature (see Patent Document 3 and the like).

[PRIOR ART DOCUMENT]

[PATENT DOCUMENT]

[Patent Document 1] Japanese Patent Application Publication No. 2008-54573

[Patent Document 2] Japanese Patent Application Publication No. 2018-38322

[Patent Document 3] Japanese Patent Application Publication No. 2020-48551

[SUMMARY OF THE INVENTION]

[PROBLEMS TO BE SOLVED BY THE INVENTION]

Although methods for predicting the sugar content and the fruit weight of fruit vegetables have been available, it is needed to review the prediction methods from various viewpoints such as a plant physiological viewpoint in order to realize more accurate prediction.

An object of the present invention is to provide a prediction method and a prediction program capable of accurately predicting a sugar content and a weight of a fruit vegetable. Another object of the present invention is to provide an environmental control information output method and an environmental control information output program capable of outputting information for setting a sugar content and a fruit weight of a fruit vegetable within a target range.

[MEANS FOR SOLVING THE PROBLEMS]

A prediction method according to the present invention, implemented by a computer, characterized by includes: acquiring actual measurement values or prediction values of a cumulative solar radiation amount and a daily average carbon dioxide concentration in each of a plurality of stages acquired by dividing a cultivation period from flowering to a time when a fruit is able to be harvested in a fruit vegetable; calculating a first index related to a sugar content or a weight of the fruit in each of the plurality of stages, based on the cumulative solar radiation amount and the daily average carbon dioxide concentration in each of the plurality of stages; and predicting the sugar content or the weight of the fruit based on a value acquired by integrating a product of the first index of each of the plurality of stages and a weight coefficient determined for each variety of the fruit vegetable and for each of the stages.

[EFFECTS OF THE INVENTION]

A prediction method and a prediction program of the present invention have an effect of being able to accurately predict a sugar content and a fruit weight of a fruit vegetable. an environmental control information output method and an environmental control information output program according to the present invention have an effect of being able to outputting information for controlling a sugar content and a weight of a fruit vegetable within a target range.

[BRIEF DESCRIPTION OF THE DRAWINGS]

FIG. 1 is a view illustrating a configuration of a processing system according to an embodiment;
FIG. 2(a) is a view illustrating a hardware configuration of a processing server and a mediation server, and FIG. 2(b) is a view illustrating a hardware configuration of a user terminal;
FIG. 3 is a view illustrating an example of an input screen;
FIG. 4 is a view illustrating an example of a prediction result display screen;
FIG. 5 is a view illustrating an example of an environmental control information display screen;
FIG. 6 is a functional block view of a processing server;
FIG. 7 is a flowchart illustrating processing of the processing server;
FIG. 8 is a flowchart illustrating the detailed processing of step S14 in FIG. 7;
FIG. 9 is a flowchart illustrating the detailed processing of step S26 in FIG. 7;
FIG. 10 is a view for explaining stages into which a period from flowering to harvesting is divided, a daily average fruit temperature of each stage, and a threshold value of each stage;
FIG. 11 is a graph schematically illustrating a relationship between a stage and temperature sensitivity;
FIG. 12(a) is a graph schematically illustrating a relationship between a cumulative solar radiation amount and a sugar content, and FIG. 12(b) is a graph schematically illustrating a relationship between a daily average carbon dioxide concentration and a sugar content;
FIG. 13(a) is a graph schematically illustrating a relationship between a cumulative solar radiation amount and a weight of a fruit, and FIG. 13(b) is a graph schematically illustrating a relationship between a daily average carbon dioxide concentration and a weight of a fruit;
FIGs. 14(a) to 14(e) are views for explaining a harvest date prediction process according to a specific example;
FIGs. 15(a) to 15(d) are views for explaining a process of bringing a sugar content closer to a target value in a specific example;
FIGs. 16(a) to 16(d) are views for explaining a process of bringing a fruit weight closer to a target value in a specific example;
FIG. 17 is a graph plotting a relationship between a cumulative solar radiation amount and a sugar content in a period from a cumulative temperature of 380 degrees Celsius to 475 degrees Celsius after flowering in an embodiment; and
FIG. 18(a) is a graph plotting a relationship between a cumulative temperature from flowering and a dry matter content of a fruit, and FIG. 18(b) is a table summarizing the dry matter content, dry matter increase, and dry matter increase ratio for each cumulative temperature of 95 degrees Celsius.

[MODES FOR CARRYING OUT THE INVENTION]

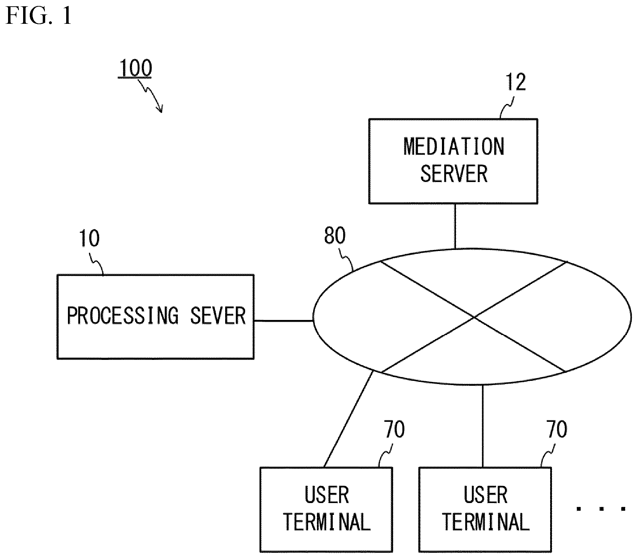

Hereinafter, an embodiment of a prediction system will be described in detail with reference to FIGs. 1 to 16. FIG. 1 schematically illustrates a configuration of a prediction system 100 according to an embodiment. The prediction system 100 of the present embodiment is a system used by a producer of fruit and vegetables (assumed to be strawberries in the present embodiment). The prediction system 100 is a system that predicts a harvest time of strawberries and predicts a sugar content and a fruit weight of fruits to be harvested, and provides information on a cultivation environment (hereinafter, referred to as environmental control information) that needs to be adjusted in order to make the predicted sugar content and fruit weight coincide with target values or fall within target ranges to producers.

As illustrated in FIG. 1, the prediction system 100 includes a processing server 10, a mediation server 12, and user terminals 70. The processing server 10, the mediation server 12, and the user terminal 70 are connected to each other via a network 80 such as the Internet, and information can be exchanged between predetermined devices (in the present embodiment, between the processing server 10 and the mediation server 12, and between the mediation server 12 and the user terminal 70).

The processing server 10 acquires information input in the user terminal 70 via the mediation server 12, and executes processing of predicting the harvest date, the sugar content, and the fruit weight of the strawberry based on the acquired information. The processing server 10 specifies how to adjust the cultivation environment so that the predicted sugar content and fruit weight match or approach the target values. Further, the processing server 10 outputs information on the predicted harvest date, sugar content, and fruit weight of the strawberry, and environmental control information for making the predicted sugar content and fruit weight coincide with or approach target values to the user terminal 70 via the mediation server 12.

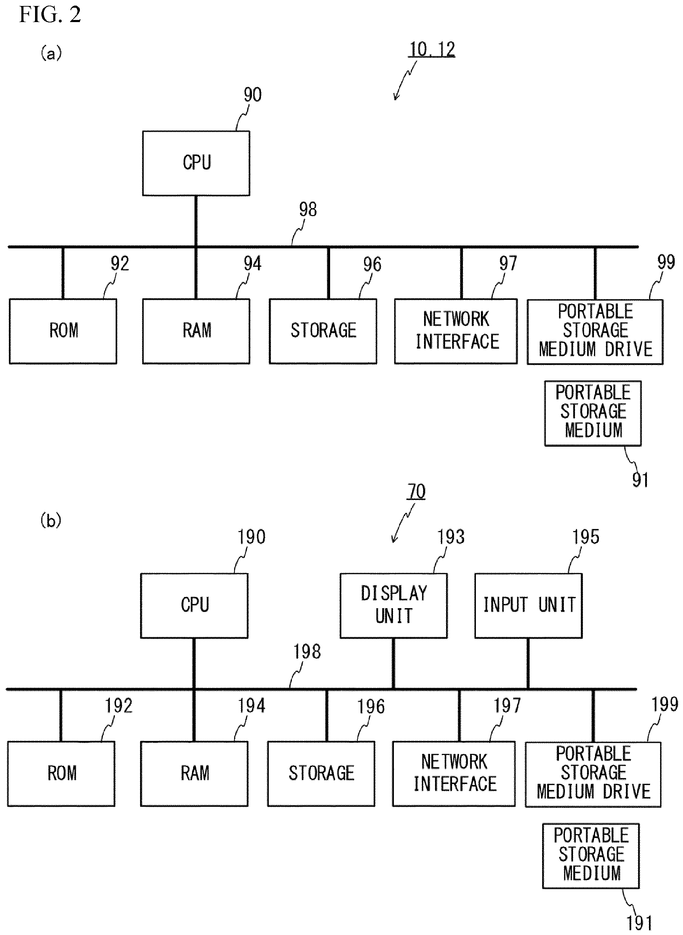

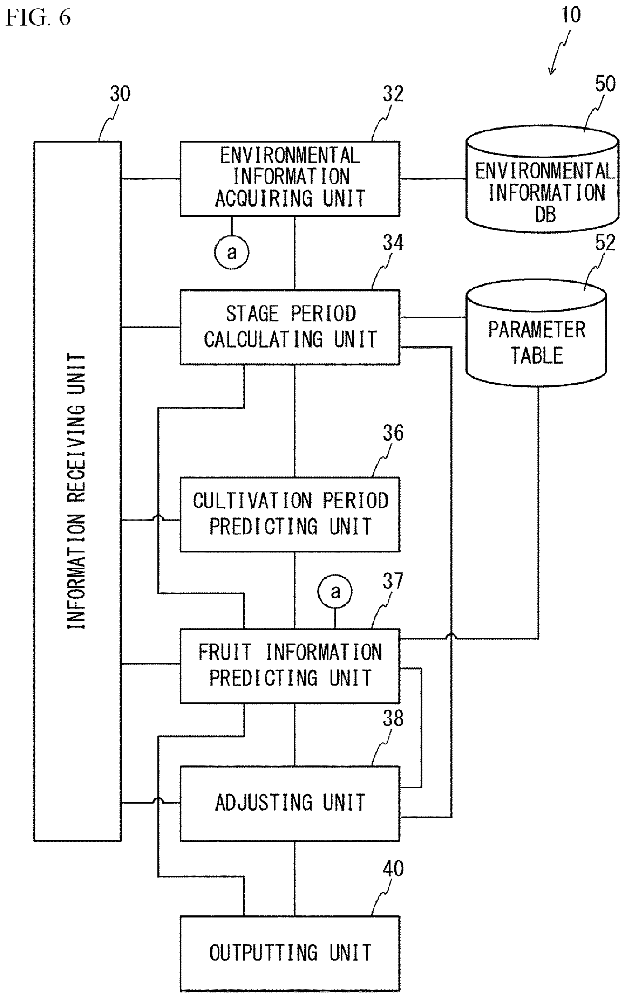

FIG. 2(a) schematically illustrates a hardware configuration of the processing server 10. As illustrated in FIG. 2(a), the processing server 10 includes a central processing unit (CPU) 90, a read only memory (ROM) 92, a random access memory (RAM) 94, a storage (for example, a solid state drive (SSD) or a hard disk drive (HDD)) 96, a network interface 97, a portable storage medium drive 99, and the like. These components of the processing server 10 are connected to a bus 98. In the processing server 10, the ROM 92 executes a program stored in the HDD 96 or the CPU 90, or a program read from the portable storage media 91 by the portable-storage-media drive 99, thereby realizing the functions of the respective units illustrated in FIG. 6. The functions of the units illustrated in FIG. 6 may be implemented by an integrated circuit such as an application specific integrated-circuit (ASIC) or a field programmable gate array (FPGA). The functions of the respective units in FIG. 6 will be described in detail later.

Returning to FIG. 1, the mediation server 12 acquires information (information needed for the prediction process in the processing server 10) input in the user terminal 70 and transmits the information to the processing server 10. The mediation server 12 acquires information output from the processing server 10 and transmits the information to the user terminal 70. The mediation server 12 has the same hardware configuration as the processing server 10 (see FIG. 2(a)).

The user terminal 70 is a terminal such as a smartphone or a personal computer (PC) used by a strawberry producer. The producer inputs needed information to the user terminal 70. The user terminal 70 transmits the input information to the mediation server 12. The user terminal 70 acquires information output from the processing server 10 via the mediation server 12 and displays the information.

Here, the user terminal 70 has a hardware configuration as illustrated in FIG. 2(b) as an example. As illustrated in FIG. 2(b), the user terminals 70 include a CPU 190, a ROM 192, a RAM 194, a storage 196, a network interface 197, a display unit 193, an input unit 195, and a portable storage media drive 199 capable of reading information stored in a portable storage media 191. The display unit 193 includes a liquid crystal display or the like, and the input unit 195 includes a touch panel, a keyboard, a mouse, or the like. These components of the user terminal 70 are connected to a bus 198.

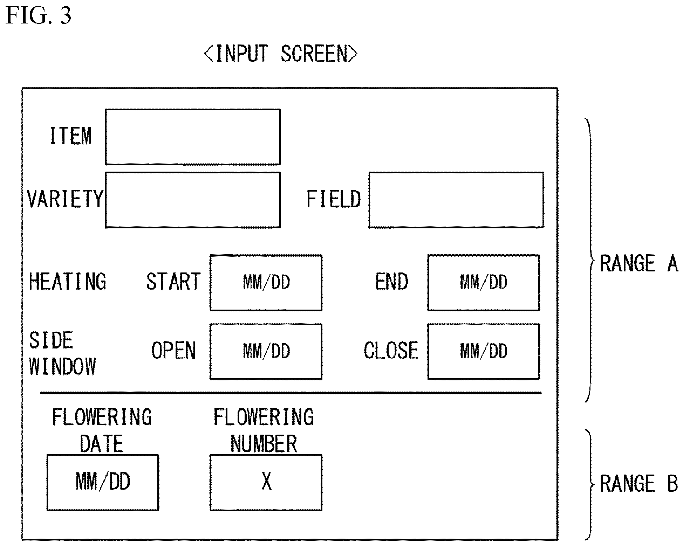

FIG. 3 illustrates an example of an input screen displayed on the display unit 193 of the user terminal 70. As illustrated in FIG. 3, the input screen is provided with a range A and a range B. The range A is provided with input fields for the producer to input the item and the variety of the fruit vegetables and to input information (name, position, etc.) of the field. Further, the range A is provided with input fields for the producer to input the start and end times of heating and the release and close times of the side windows. The range B is provided with an input field for the producer or the like to input information on the flowering date of the seedlings actually planted in the field and information on the number of flowering at the flowering date.

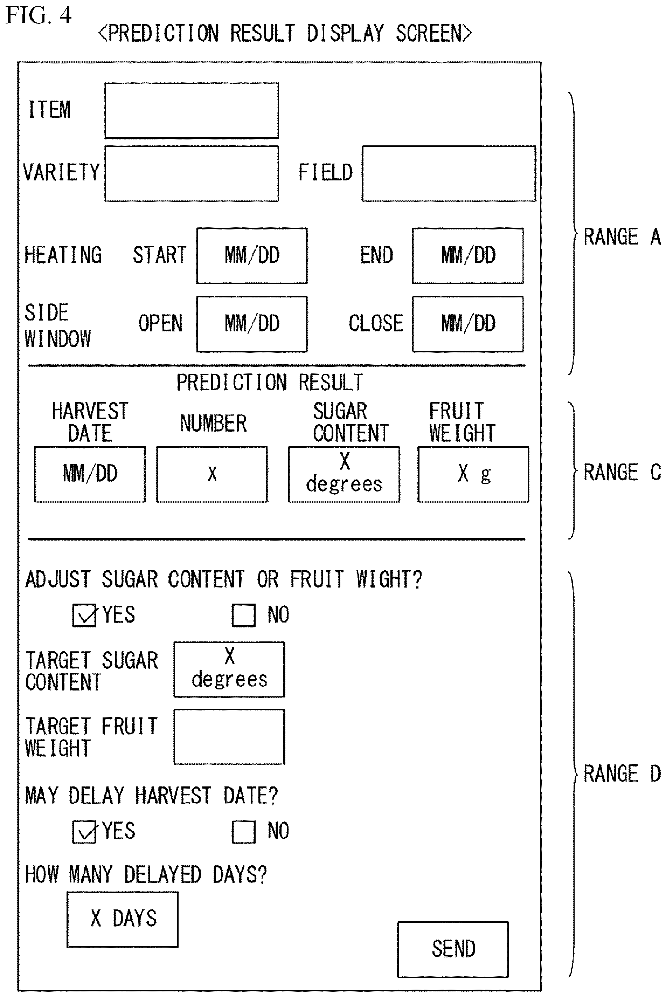

FIG. 4 illustrates an example of a prediction result display screen displayed on the display unit 193 of the user terminal 70 after the processing server 10 performs the prediction process. The prediction result display screen of FIG. 4 is provided with the range A similar to that of FIG. 3, and is also provided with a range C and a range D. In the range C, the prediction result (harvest date, number, sugar content, and fruit weight) of the processing server 10 is displayed. In the range D, an input field is provided for the producer to input whether or not the predicted sugar content and fruit weight are to be adjusted, and if so, how they are to be adjusted. Specifically, the range D is provided with a field (check box) for inputting whether or not to adjust the sugar content or the fruit weight, a field for inputting either the target sugar content or the target fruit weight, a field (check box) for inputting whether or not to delay the harvest date, a field for inputting the maximum number of days that can be delayed if the harvest date can be delayed, and a send button.

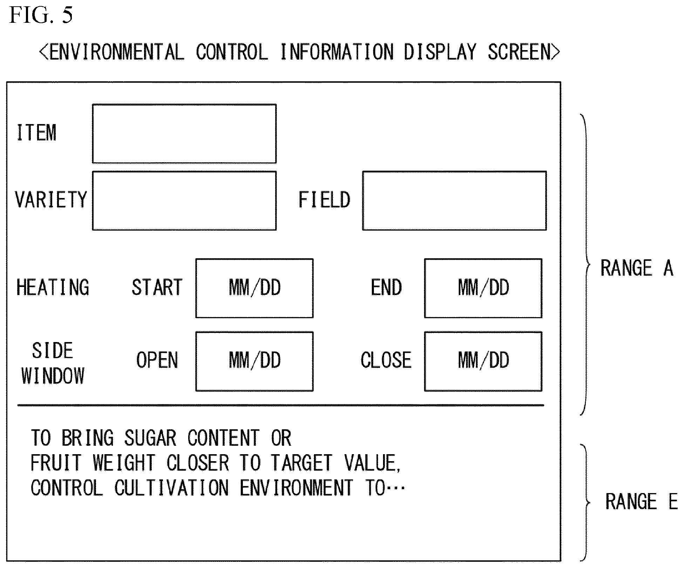

FIG. 5 illustrates an example of an environmental control information display screen on which environmental control information for bringing the sugar content and the fruit weight close to the target values, which are specified by the processing server 10, is displayed. Specifically, the environmental control information display screen of FIG. 5 is provided with the range A similar to that of FIG. 3, and is also provided with a range E. In the range E, how to control the daily average carbon dioxide concentration, the solar radiation amount, and the temperature in order to bring the sugar content or the fruit weight close to the target value is displayed.

(Regarding Functions Included in Processing Server 10)

FIG. 6 is a functional block view of the processing server 10. In the processing server 10, the CPU90 executes a program to realize each function as illustrated in FIG. 6. Specifically, the processing server 10 includes an information receiving unit 30, an environmental information acquiring unit 32, a stage period calculating unit 34, a cultivation period predicting unit 36, a fruit information predicting unit 37, an adjusting unit 38, and an outputting unit 40.

Note that FIG. 6 also illustrates an environmental information DB 50 and a parameter table 52 stored in a storage 196 or the like of the processing server 10. The environmental information DB 50 stores past environmental information (information on atmospheric temperatures, solar radiation, and daily average carbon dioxide concentration) of the field. In addition, the environmental information DB 50 stores predicted values of future environmental information (mesh agricultural meteorological information) and ordinary values of past environmental information (used as predicted values of future environmental information) acquired from an external server (for example, a server managed by the National Research and Development Corporation National Agriculture and Food Research Organization (Department of Agriculture and Research)). The environmental information DB 50 may be stored in an external database server.

The parameter table 52 is a table for storing parameters used by the stage period calculating unit 34 and the fruit information predicting unit 37. The parameters stored in the parameter table 52 will be described in detail later.

The information receiving unit 30 acquires information input to the input screen of FIG. 3 or information input to the prediction result display screen of FIG. 4 from the mediation server 12 by the producer operating the user terminal 70, and passes the acquired information to the environmental information acquiring unit 32, the stage period calculating unit 34, the cultivation period predicting unit 36, the fruit information predicting unit 37, and the adjusting unit 38.

The environmental information acquiring unit 32 acquires, from the environmental information DB 50, information on the atmospheric temperatures (past, forecast, and average atmospheric temperatures), information on the amounts of solar radiation (past, forecast, and average amounts of solar radiation), and the daily average carbon dioxide concentration in the field input in the area A of the input screen in FIG. 3. To be more specific, the environmental information acquiring unit 32 acquires information on the temperatures, the solar radiation amounts, and the daily average carbon dioxide concentration after the flowering date input by the producers from the environmental information DB 50. The environmental information acquiring unit 32 corrects the temperature information (the forecast date and the normal year temperature date) acquired from the environmental information DB 50 based on the information of the heating and the side window input by the producer or the like. When the producer sets the information of the LED illumination and the information of the light shielding, the environmental information acquiring unit 32 may correct the information of the solar radiation amount based on these pieces of information. The environmental information acquiring unit 32 transmits the acquired (and corrected) data to the stage period calculating unit 34 and the fruit information predicting unit 37.

The stage period calculating unit 34 calculates the fruit temperature (the temperature of the fruit surface) on each day from the information on the temperature and the solar radiation amount on each day. The stage period calculating unit 34 calculates the number of days required for each of the plurality of stages (the period of each of the plurality of stages) acquired by dividing the cultivation period from the flowering to the harvest of the strawberry based on the calculated fruit temperature of each day. A method of calculating the fruit temperature and a method of calculating the period of each stage by the stage period calculating unit 34 will be described later.

The cultivation period predicting unit 36 predicts the cultivation period by summing the periods of the respective stages calculated by the stage period calculating unit 34. The cultivation period predicting unit 36 predicts the harvest date (maturity date) of the fruit based on the flowering date and the cultivation period.

The fruit information predicting unit 37 predicts the sugar content and the weight of the fruit to be harvested based on the daily average carbon dioxide concentration and the solar radiation amount in the field in the period of each stage calculated by the stage period calculating unit 34. The method of predicting the sugar content and the fruit weight by the fruit information predicting unit 37 will be described in detail later.

The outputting unit 40 outputs the prediction results by the cultivation period predicting unit 36 and the fruit information predicting unit 37 to the user terminal 70 via the mediation server 12. The prediction result display screen of FIG. 4 is displayed on the display unit 193 of the user terminal 70. When the producer inputs information in the range D of the prediction result display screen of FIG. 4 and presses the transmission button, the information input in the range D is transmitted from the user terminal 70 to the processing server 10 via the mediation server 12. The information transmitted to the processing server 10 is received by the information receiving unit 30 and is transferred to the adjusting unit 38.

When the producer inputs an instruction to adjust the sugar content or the fruit weight on the prediction result display screen (range D) of FIG. 4, the adjusting unit 38 specifies the environmental control information for bringing the sugar content or the fruit weight close to the target value based on the information input to the range D. The adjusting unit 38 may specify the environmental control information by itself, or may specify the environmental control information in cooperation with the stage period calculating unit 34 and the cultivation period predicting unit 36.

The outputting unit 40 outputs the environmental control information specified by the adjusting unit 38 to the user terminal 70 via the mediation server 12. The environmental control information display screen of FIG. 5 is displayed on the display unit 193 of the user terminal 70.

(Regarding Process of Processing Server 10)

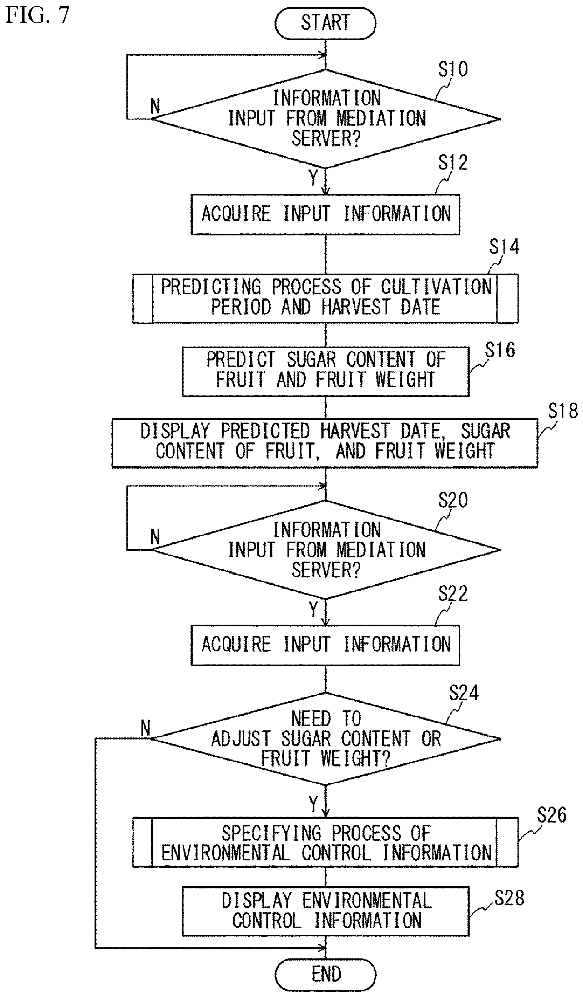

Next, processing of the processing server 10 will be described in detail along flowcharts of FIGs. 7 to 9 with reference to other drawings as appropriate.

When the process of FIG. 7 is started, first, in step S10, the information receiving unit 30 waits until information is input from the mediation server 12. That is, the information receiving unit 30 waits until the information input by the producer to the input screen of FIG. 3 in the user terminal 70 is transmitted via the mediation server 12. When the information receiving unit 30 receives the input of the information from the mediation server 12, the process proceeds to step S12.

When the process proceeds to step S12, the information receiving unit 30 acquires information input from the mediation server 12. The information receiving unit 30 passes the acquired information to the environmental information acquiring unit 32, the stage period calculating unit 34, the cultivation period predicting unit 36, the fruit information predicting unit 37, and the adjusting unit 38.

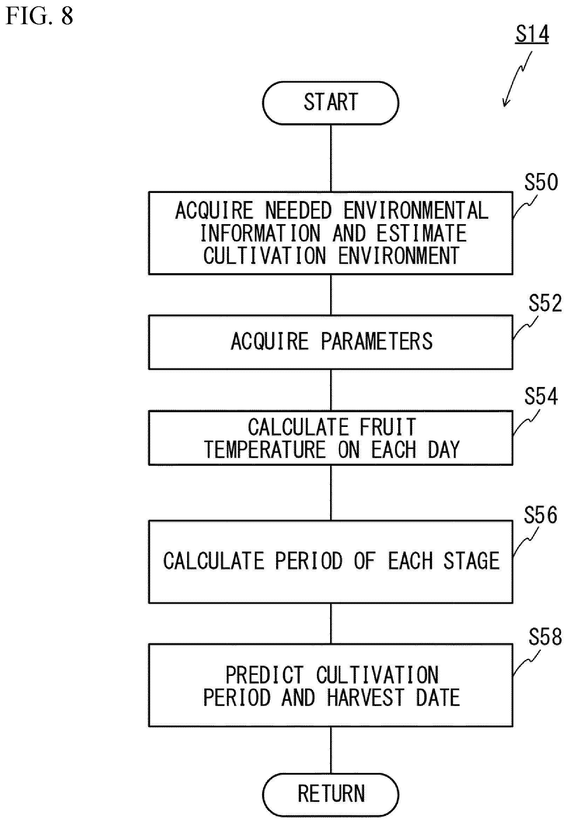

Next, in step S14, a process of predicting the cultivation period and the harvest date is executed. Specifically, the process of FIG. 8 is executed.

When the process of FIG. 8 is started, first, in step S50, the environmental information acquiring unit 32 acquires needed environmental information and estimates the cultivation environment. Specifically, the environmental information acquiring unit 32 acquires information (measured values and predicted values) of the temperature, the solar radiation amount, and the daily average carbon dioxide concentration after the flowering date. The environmental information acquiring unit 32 corrects the information of the temperature in accordance with the situation of the field based on the information of the heating and the side window input by the producer, and estimates the temperature (degrees Celsius) in the facility. When the producer sets the information of the LED illumination and the information of the light shielding, the environmental information acquiring unit 32 corrects the information of the solar radiation amount based on these pieces of information and estimates the in-facility solar radiation amount (MJ). The environmental information acquiring unit 32 transmits the acquired (and estimated) data to the stage period calculating unit 34 and the fruit information predicting unit 37.

Next, in step S52, the stage period calculating unit 34 acquires parameters used for processing in steps S54 and S56 described later from the parameter table 52. The details of the parameters will be described later.

Next, in step S54, the stage period calculating unit 34 calculates the temperature of the fruits on each day. Specifically, the stage period calculating unit 34 calculates the fruit temperature of each day using the following equation (1).

$$\text{Fruit temperature (degrees Celsius)} = \text{Temperature in facility} \times (\alpha \cdot \ln \text{ solar radiation amount in facility} + \beta) \tag{1}$$

Here, $\alpha$ and $\beta$ are parameters (coefficients) predetermined for each field (house).
The parameters $\alpha$ and $\beta$ are defined for each field in the parameter table 52.

Next, in step S56, the stage period calculating unit 34 calculates the period of each stage (the number of days required for each stage).

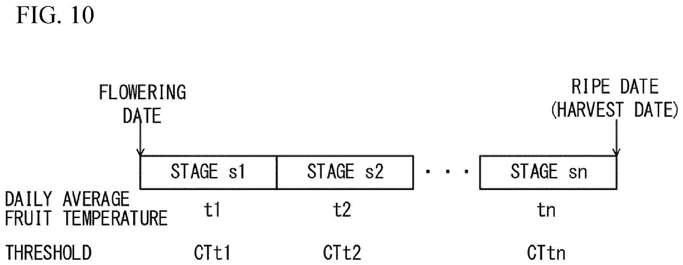

In the present embodiment, as illustrated in FIG. 10, the period from the flowering date to the harvest date is divided into a plurality of periods, and each period is referred to as a stage (growth stage). The stages are denoted by s1, s2,....sn, and the daily average temperatures of the stages s1, s2,. ...sn are denoted by t1, t2,. ...tn. Further, the thresholds of the stages s1, s2,., ...sn are set to CTs1, CTs2,., ...CTsn. The values n, t1 to tn, and CTs1 to CTsn are predetermined for each type and stored in the parameter table 52.

The stage period calculating unit 34 calculates the period Tk of each stage sk from the following equation (2).

$$T_k = CT_{sk}/(\gamma k \cdot t_k + \delta k)\ldots(2)$$

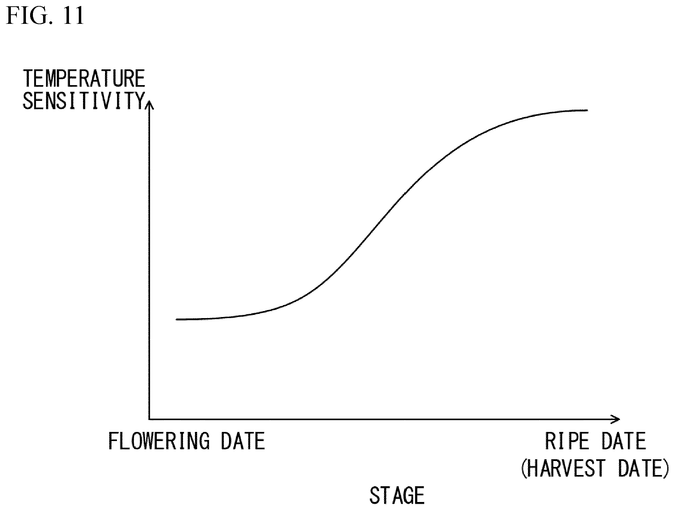

In the above equation (2), $\gamma k$ and $\delta k$ are parameters (coefficients) determined for each type of variety, and are stored in the parameter table 52. FIG. 11 is a graph schematically illustrating a relationship between the stage and the temperature sensitivity in strawberry ripening. As illustrated in FIG. 11, in the case of strawberry, the temperature sensitivity increases as the stage progresses. Therefore, in order to express this temperature sensitivity, the closer the stage is to the harvest date, the larger the value of the parameter $\gamma k$ is set, and the smaller the value of the parameter $\delta k$ is set. That is, as the stage is closer to the harvest date, the value of the denominator ($\gamma k \cdot t_k + \delta k$) of the above equation (2) is more likely to be affected by a change in the value of the temperature $t_k$. The denominator ($\gamma k \cdot t_k + \delta k$) is the temperature-related index value for one day, and the above equation (2) means that the period (number of days) until the integrated value of the temperature-related index value for one day reaches the threshold CTsk is the period Tk of the stage sk.

Next, in step S58, the cultivation period predicting unit 36 predicts the cultivation period and the harvest date. The cultivation period predicting unit 36 adds up the periods Tk of the respective stages sk acquired for each flowering day as in the following equation (3) to predict the cultivation period (the number of ripe days).

$$\text{Cultivation period} = T1 + T2 + \ldots + Tn$$

$$= CT_{s1}/(\gamma 1 \cdot t1 + \delta 1) + CT_{s2}/(\gamma 2 \cdot t2 + \delta 2) + \ldots + CT_{sn}/(\gamma n \cdot tn + \delta n)\ldots(3)$$

The cultivation period predicting unit 36 predicts the harvest date for each flowering date using the following equation (4).

$$\text{Harvest date}=\text{flowering date}+\text{cultivation period}...(4)$$

The process of FIG. 8 is thus completed. When the process of FIG. 8 is completed, the process proceeds to step S16 of FIG. 7.

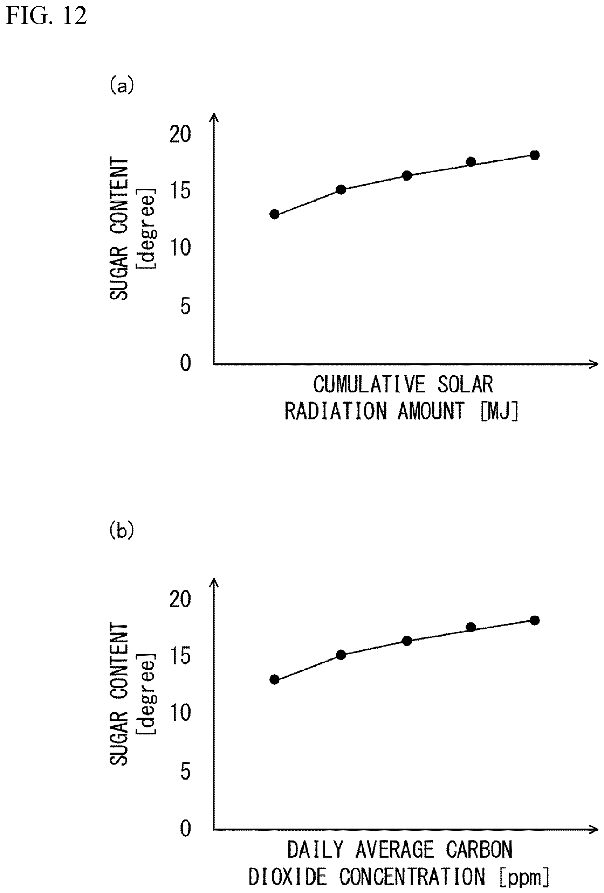

When the process proceeds to step S16 in FIG. 7, the fruit-information predicting unit 37 predicts the sugar content and the weight of the fruits to be harvested on the predicted harvest date. Here, FIG. 12(a) is a graph schematically illustrating a relationship between the cumulative solar radiation amount and the sugar content, and FIG. 12(b) is a graph schematically illustrating a relationship between the daily average carbon dioxide concentration and the sugar content.

Conventionally, if the daily average carbon dioxide concentration is constant, the sugar content can be calculated from the following equation (5). Note that u is the cumulative solar radiation amount, and w is the leaf area index. Further, a, b, and c are coefficients.

$$\text{Sugar content}=a\cdot\ln(u)\cdot\{1-\exp(-w\cdot b)+c\}...(5)$$

In the conventional art, the sugar content can be calculated from the following equation (6) if the cumulative solar radiation amount is constant. Note that v is the daily average carbon dioxide concentration, and d, e, and f are coefficients.

$$\text{Sugar content}=d\cdot\ln(v)\cdot\{1-\exp(-w\cdot e)+f\}...(6)$$

Further, conventionally, when the daily average carbon dioxide concentration and the cumulative solar radiation amount change, the sugar content can be calculated from the following equation (7). Note that v is the daily average carbon dioxide concentration, and g, h, I, j, and k are coefficients.

$$\text{Sugar content}=\{g\cdot\ln(u)+h\}\cdot\{I\cdot\ln(v)+j\}\cdot\{1-\exp(-w\cdot h)\}+k...(7)$$

On the other hand, the present inventors have reached an idea that sensitivity should be considered in the prediction of the sugar content, based on the knowledge that sensitivity of the solar radiation amount and the daily average carbon dioxide concentration to the sugar content also varies for each stage, similarly to the temperature sensitivity of FIG. 11. Under this consideration, the present inventors use the following equation (8) for predicting the sugar content, where the weighting factors of stages 1, 2,.., n are $m_1, m_2, \cdots m_n$, the cumulative solar radiation amounts of the stages are $u_1, u_2, \cdots u_n$, and the averages of the daily average carbon dioxide concentration of the stages are $v_1, v_2, \cdots v_n$.

$$\text{Sugar content}=m_1\cdot\{g\cdot\ln(u_1)+h)\}\cdot\{I\cdot\ln(v_1)+j)\}\cdot\{1-\exp(-w\cdot h)\}+m_2\cdot\{g\cdot\ln(u_2)+h)\}\cdot\{I\cdot\ln(v_2)+j)\}\cdot\{1-\exp(-w\cdot h)\}+m_n\cdot\{g\cdot\ln(u_n)+h)\}\cdot\{I\cdot\ln(v_n)+j)\}\cdot\{1-\exp(-w\cdot h)\}+k \quad (8)$$

The value of n, the value of $m_n$, and the values of other parameters differ for each variety. Since the values of n, m, g, I, j, h, and k are stored in the parameter table 52, the fruit-information predicting unit 37 reads the values from the parameter table 52, and substitutes the cumulative solar radiation amounts $u_1, u_2, \cdots, u_n$ and the averages $v_1, v_2, \cdots, v_n$ of the daily average carbon dioxide concentration of each stage received from the environment-information acquiring unit 32 into the above equation (8). The fruit information predicting unit 37 can predict the sugar content of the fruit with high accuracy by using the above equation (8).

In the above equation (8), the value of $\{g\cdot\ln(u_n)+h\}\cdot\{I\cdot\ln(v_n)+j)\}\cdot\{1-\exp(-w\cdot h)\}$ in each stage is the first index of the sugar content. Further, it can be said that the above equation (8) predicts the sugar content based on the value acquired by integrating a product of the first index of each stage and the weight coefficient $m_n$ of each stage.

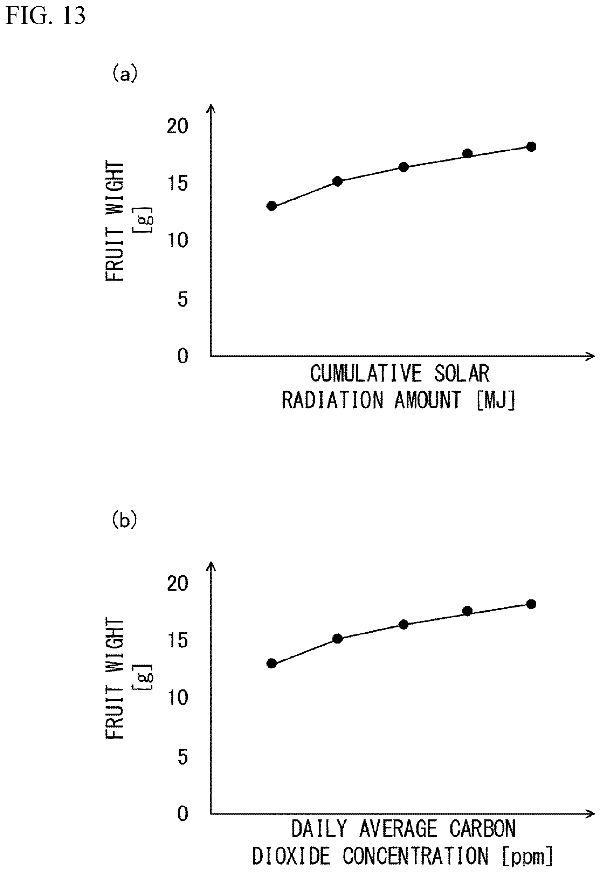

FIG. 13(a) is a graph schematically illustrating a relationship between the cumulative solar radiation amount and the fruit weight, and FIG. 13(b) is a graph schematically illustrating a relationship between the daily average carbon dioxide concentration and the fruit weight.

In the prior art, if the daily average carbon dioxide concentration is constant, the weight of the fruit can be calculated from the following equation (9). Note that u is the cumulative solar radiation amount, and w is the leaf area index. Further, a', b', and c' are coefficients.

$$\text{Fruit weight}=a'\cdot\ln(u)\cdot\{1-\exp(-w\cdot b')+c'\}...(9)$$

In the conventional art, the weight of the fruit can be calculated from the following equation (10) if the cumulative solar radiation amount is constant. Note that v is the daily average carbon dioxide concentration, and d', e', and f' are coefficients.

$$\text{Fruit weight} = d' \cdot \ln(v) \cdot \{1 - \exp(-w \cdot e') + f'\} \dots (10)$$

Further, in the prior art, when the daily average carbon dioxide concentration and the cumulative solar radiation amount are changed, the fruit weight can be calculated from the following equation (11). Note that v is the daily average carbon dioxide concentration, and g', h', I', j', and k' are coefficients.

$$\text{Sugar content} = \{g' \cdot \ln(u) + h'\} \cdot \{I' \cdot \ln(v) + j'\} \cdot \{1 - \exp(-w \cdot h')\} + k' \dots (11)$$

On the other hand, the present inventors have come to consider that the sensitivity should be considered in the prediction of the fruit weight, based on the knowledge that the sensitivity of the solar radiation amount and the daily average carbon dioxide concentration to the fruit weight also varies for each stage, as in the case of the temperature sensitivity in FIG. 11. Under this consideration, the present inventors use $m_1'$, $m_2$, ...$m_n'$ as respective weight coefficients of the stages 1, 2, ...in the following equation (12) for the prediction of the fruit weight.

$$\text{Fruit weight} = m_1' \cdot \{g' \cdot \ln(u_1) + h'\} \cdot \{I' \cdot \ln(v_1) + j'\} \cdot \{1 - \exp(-w \cdot h') + m_2' \cdot \{g' \cdot \ln(u_2) + h'\} \cdot \{I' \cdot \ln(v_2) + j'\} \cdot \{1 - \exp(-w \cdot h')\} \cdots m_n' \cdot \{g' \cdot \ln(u_n) + h'\} \cdot \{I' \cdot \ln(v_n) + j'\} \cdot \{1 - \exp(-w \cdot h')\} + k' \quad (12)$$

The value of n, the value of $m_n$, and the values of other parameters differ for each variety. The fruit-information predicting unit 37 reads the values of the parameters of the above equation (12) from the parameter table 52, and substitutes the cumulative solar radiation amounts $u_1$, $u_2$, $\cdots$, $u_n$ and the averages of the daily average carbon dioxide concentration $v_1$, $v_2$, $\cdots$, $v_n$ of the respective stages into the above equation (12). Thus, the fruit information predicting unit 37 calculates the fruit weight.

In the above equation (12), the values of $\{g' \cdot \ln(u_n) + h'\} \cdot \{I' \cdot \ln(v_n) + j'\} \cdot \{1 - \exp(-w \cdot h')\}$ at each stage are first indices relating to fruit weight. Further, it can be said that the above equation (12) predicts the weight of fruits based on the value acquired by integrating a product of the first index of each stage and the weight coefficient $m_n'$ of each stage.

Next, in step S18 of FIG. 7, the outputting unit 40 outputs the harvest date predicted in step S14 and the sugar content and the weight of the fruits predicted in step S16 to the user terminals 70. As a result, the prediction result display screen as illustrated in FIG. 4 is displayed on the display unit 193 of the user terminal 70.

Next, in step S20, the information receiving unit 30 waits until information is input from the mediation server 12. That is, the information receiving unit 30 waits until the producer inputs needed items and presses the transmission button on the prediction result display screen of FIG. 4. When the producer presses the transmission button, the information receiving unit 30 proceeds to step S22.

When the process proceeds to step S22, the information receiving unit 30 acquires information (information input to the range D in FIG. 4) transmitted from the mediation server 12. The information receiving unit 30 also passes the acquired information to the adjusting unit 38.

Next, in step S24, the adjusting unit 38 determines whether or not the sugar content or the weight of the fruits needs to be adjusted. In this case, the adjusting unit 38 determines whether or not the check box of "Yes" is checked as the answer of "Do you want to adjust sugar content or fruit weight?" in the range D of the prediction result display screen of FIG. 4. If the determination in step S24 is negative, the adjusting unit 38 ends the entire process of FIG. 7.

On the other hand, if the determination in step S24 is affirmative, the adjusting unit 38 proceeds to step S26.

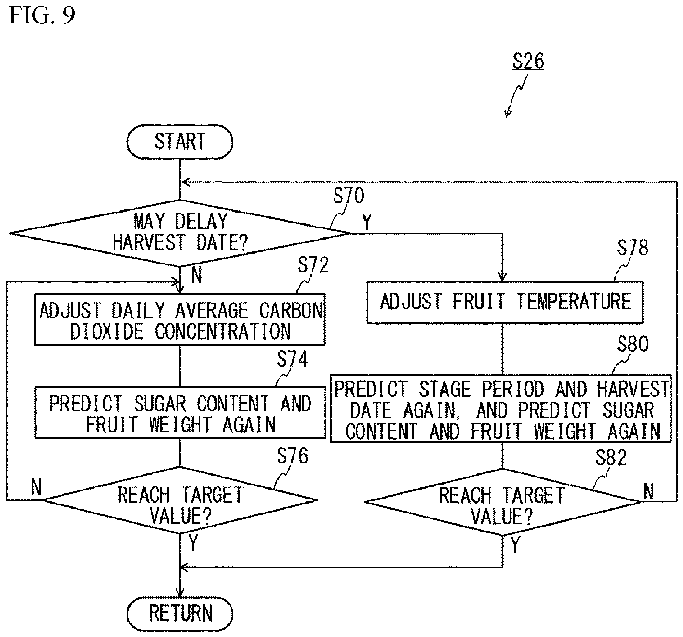

In step S26, the adjusting unit 38 executes a process of specifying the environmental control information. Specifically, the process according to the flowchart of FIG. 9 is executed.

When the process of FIG. 9 is started, first, in step S70, the adjusting unit 38 determines whether or not the harvest date may be delayed.

Specifically, the adjusting unit 38 determines whether or not the check box of "Yes" is checked as the answer of "May delay the harvest date?" in the range D of the prediction result display screen of FIG. 4. If the determination in step S70 is negative, that is, if the producer wants to bring the sugar content and the fruit weight close to the target values without delaying the harvest date, the adjusting unit 38 proceeds to step S72.

When the process proceeds to step S72, the adjusting unit 38 increases the daily average carbon dioxide concentration of each stage according to a predetermined rule in order to make the photosynthesis of the strawberry seedlings more active. As the predetermined rule, for example, a rule may be adopted in which the daily average carbon dioxide concentration of the stage closest to the harvest date is increased by a predetermined value, and when the carbon dioxide concentration reaches a range in which the carbon dioxide concentration can be increased, the daily average carbon dioxide concentration of the stage next closest to the harvest date is increased by a predetermined value. As the predetermined rule, a rule may be adopted in which the daily average carbon dioxide concentration of all the stages is increased by a predetermined value.

Next, in step S74, the adjusting unit 38 predicts the sugar content and the fruit weight again using the newly set daily average carbon dioxide concentration.

Next, in step S76, the adjusting unit 38 determines whether or not the sugar content or the fruit weight has reached the target value. In step S76, the determination is assumed to be affirmative when the sugar content or the fruit weight is equal to the target value or when the sugar content or the fruit weight is closer to the target value by a predetermined value or more (when the sugar content or the fruit weight is included in a predetermined range based on the target value). If the determination in step S76 is negative, the process returns to step S72, and the daily average carbon dioxide concentration is adjusted again. Thereafter, when the determination in step S76 is affirmative, the process returns to step S28 in FIG. 7.

On the other hand, if the determination in step S70 is affirmative, that is, if the checkbox of "Yes" is checked as the answer "May the harvest date be delayed?" in the range D in FIG. 4, the adjusting unit 38 proceeds to step S78.

When the process proceeds to step S78, the adjusting unit 38 lowers the fruit temperature in order to increase the photosynthetic amount by extending the period until the harvest date. Here, the fruit temperature is related to the solar radiation amount and the atmospheric temperature as described above, and it is preferable to adjust the atmospheric temperature to be lowered because the amount of photosynthesis is reduced when the solar radiation amount is lowered. Therefore, the adjusting unit 38 lowers the temperature in accordance with a predetermined rule. As the predetermined rule, for example, a rule may be adopted in which the temperature of the stage closest to the harvest date is decreased by a predetermined value, and when the temperature reaches a range in which the temperature can be decreased, the temperature of the stage next closest to the harvest date is decreased by a predetermined value, and so on. Further, as the predetermined rule, a rule may be adopted in which the temperatures of all the stages are decreased by a predetermined value.

Next, in step S80, the adjusting unit 38 predicts each stage period and the harvest date again under the new conditions in cooperation with the stage period calculating unit 34 and the cultivation period predicting unit 36, and predicts the sugar content and the fruit weight again based on each predicted stage period and harvest date.

Next, in step S82, it is determined whether or not the sugar content or the weight of the fruits has reached a target value. In this step S82, as in step S76, the determination is also affirmed when the sugar content or the fruit weight is equal to the target value or when the sugar content or the fruit weight is closer to the target value by a predetermined value or more (when the sugar content or the fruit weight is included in a predetermined range based on the target value). If the determination in step S82 is negative, the adjusting unit 38 returns to step S70. When the process returns to step S70, the adjusting unit 38 determines again whether the harvest date may be delayed. In this step S70, it is determined whether or not the difference between the re-predicted harvest date in step S80 and the first predicted harvest date exceeds the number of days input in the answer field of "How many days do you want to delay?" in the range D of FIG. 4. If the determination in step S70 is affirmative, the adjusting unit 38 executes the processing in steps S78, S80, and S82 again. On the other hand, when the determination in step S70 is negative, the adjusting unit 38 executes the processes in steps S72, S74, and S76. Then, when the determination in step S82 or S78 is affirmative, the adjusting unit 38 returns to step S28 in FIG. 7. In some cases, the sugar content or the weight of fruits does not approach the target value by a predetermined amount or more even if the determination of steps S76 and S82 is repeated a predetermined number of times. In such a case, the process of FIG. 8 may be terminated (forcibly terminated) and the process may return to step S28 of FIG. 7.

Returning to step S28 in FIG. 7, the outputting unit 40 outputs the environmental control information to the user terminals 70 via the mediation server 12. As a result, the environmental control information display screen as illustrated in FIG. 5 is displayed on the display unit 193 of the user terminal 70. For example, when the process goes through step S72 in FIG. 9, the message "Please raise the daily average carbon dioxide concentration to X ppm from MM/DD to MM/DD" is displayed in the range E in FIG. 5. When the process goes through step S78 in FIG. 9, "Please cool to X degrees Celsius from MM/DD to MM/DD" or the like is displayed. When the process of FIG. 8 is forcibly terminated, a message "The sugar content or the fruit weight cannot be set to the input target value" or the like is displayed.

In the present embodiment, the case where the daily average carbon dioxide concentration is adjusted in step S72 and the ambient temperature is adjusted in step S78 has been described, but the solar radiation amount may be adjusted in steps S72 and S78.

(Specific Example)

Next, a specific example will be described.

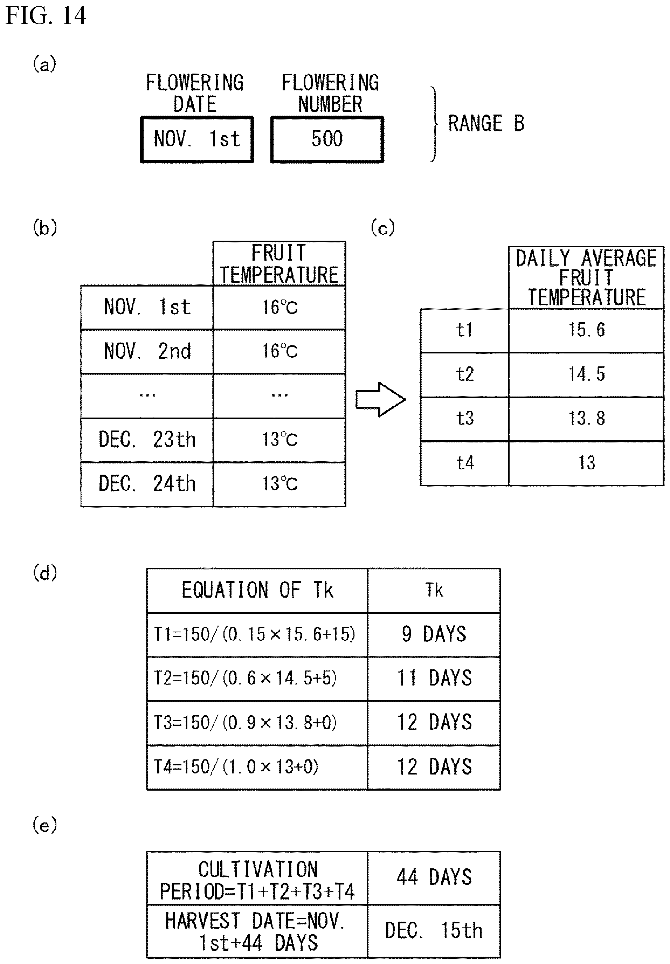

FIG. 14(a) illustrates a state where the producer inputs that 500 flowers have been produced on November 1 as the date of flowering in the range B of the input screen (FIG. 3). In this example, it is assumed that values of the fruit temperature as illustrated in FIG. 14(b) are acquired as a result of the stage period calculating unit 34 calculating the fruit temperature of each day from the information of the atmospheric temperature and the solar radiation amount acquired by the environmental information acquiring unit 32. In this example, it is assumed that the cultivation period of the strawberry is divided into four stages s1 to s4, and daily average fruit temperatures t1 to t4 of respective stage s1 to s4 is acquired as illustrated in FIG. 14(c). Note that, in the step of obtaining the daily average fruit temperatures t1 to t4 in FIG. 14(c), it is needed to set the period of the stages s1 to s4, but in the first step, a predetermined approximate period is used as the period of the stages s1 to s4 for obtaining the daily average fruit temperatures t1 to t4. Then, the stage period calculating unit 34 may repeat the process of obtaining the period of each stage using the set daily average fruit temperature, then recalculating the acquired daily average fruit temperatures t1 to t4 of the period of each stage, and further obtaining the period of each stage again using the recalculated daily average fruit temperatures t1 to t4.

Then, the stage period calculating unit 34 calculates periods T1 to T4 of the respective stages based on the above equation (2). For example, it is assumed that the periods T1 to T4 of the respective stages of fruits with the flowering date of November 1 are acquired as illustrated in FIG. 14(d). In this example, the parameters CTs1 to CTs4 in the above equation (2) are 150, $\gamma 1$, $\gamma 2$, $\gamma 3$, and $\gamma 4$ are 0.15, 0.6, 0.9, and 1.0 respectively, and $\delta 1$, $\delta 2$, $\delta 3$, and $\delta 4$ are 15, 5, 0, and 0 respectively.

Then, the cultivation period predicting unit 36 adds up the periods T1 to T4 of the respective stages to predict the cultivation period. As a result, as illustrated in FIG. 14(e), the cultivation period is predicted to be 44 days. In this case, the cultivation period predicting unit 36 predicts the harvest date of the flower (fruit) that bloomed on November 1 as December 15, which is 44 days after the flowering date.

(Case of Adjusting Sugar Content)

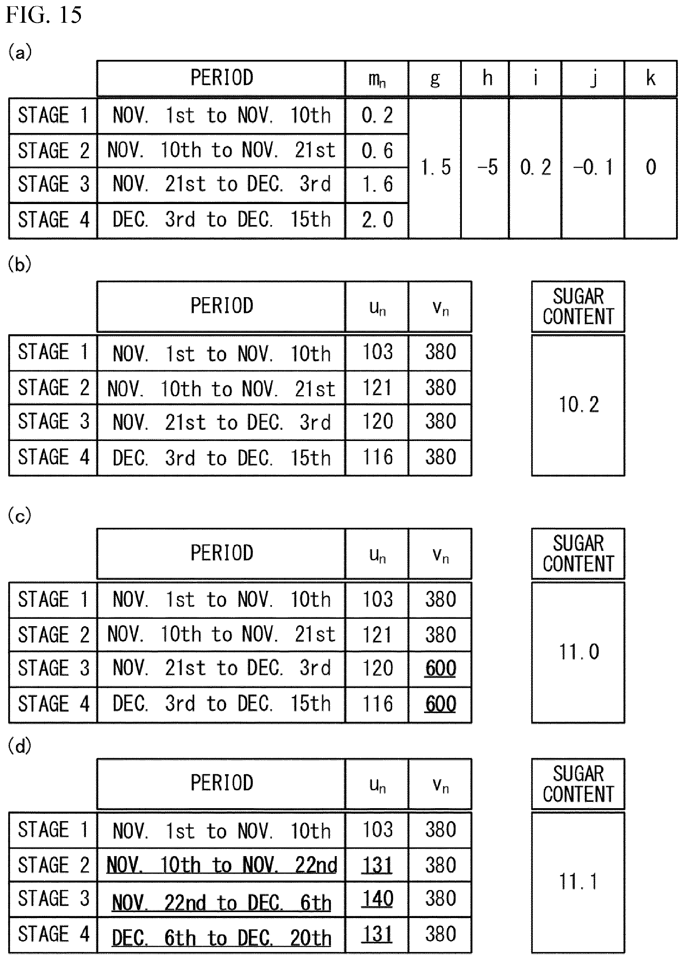

In this example, when the sugar content is to be adjusted, the parameters $m_n$, g, h, I, j, and k in the above equation (8) are assumed to be values as illustrated in FIG. 15(a). Further, by managing the leaf area index to be constant, {1-exp(-w·h)} in the above equation (8) is regarded as 1.

In this case, if the cumulative solar radiation amount $u_n$ and the average of the daily average carbon dioxide concentration $v_n$ of each stage before the adjustment by the adjusting unit 38 are values as illustrated in FIG. 15(b), the sugar content=10.2 is acquired as a result of the calculation of the above equation (8).

In contrast, it is assumed that the producer inputs "11.0 degrees" as the target sugar content in the range D of FIG. 4 and inputs that the harvest date is not to be delayed. In this case, the adjusting unit 38 repeats step S72 in FIG. 9 to set the daily average carbon dioxide concentration in stages 3 and 4 to 600 ppm as illustrated in FIG. 15(c). As a result, the predicted sugar content coincided with the target sugar content of 11.0 degrees. In this case, the outputting unit 40 outputs the daily average carbon dioxide concentration in the period from November 21 to December 15 to the range E of the environmental control information display screen of FIG. 5 so that the daily average carbon dioxide concentration is 600 ppm.

On the other hand, it is assumed that the producer inputs "11.0 degrees" as the target sugar content in the range D of FIG. 4 and inputs that the harvest date may be delayed to the seventh day. In this case, the adjusting unit 38 repeats step S78 in FIG. 9. As a result of this process, at the stage where the temperatures of the stages 2 to 4 are lowered by a predetermined temperature, as illustrated in FIG. 15(d), the periods of the stages 2 to 4 are changed, and accordingly, the cumulative solar radiation amount $u_2$ to $u_4$ is also changed, and the predicted sugar content becomes 11.1 degrees. In this case, the outputting unit 40 outputs the information to the range E of the environmental control information display screen in FIG. 5 so as to lower the temperature in the period from November 10 to December 20.

(Case of Adjusting Fruit Weight)

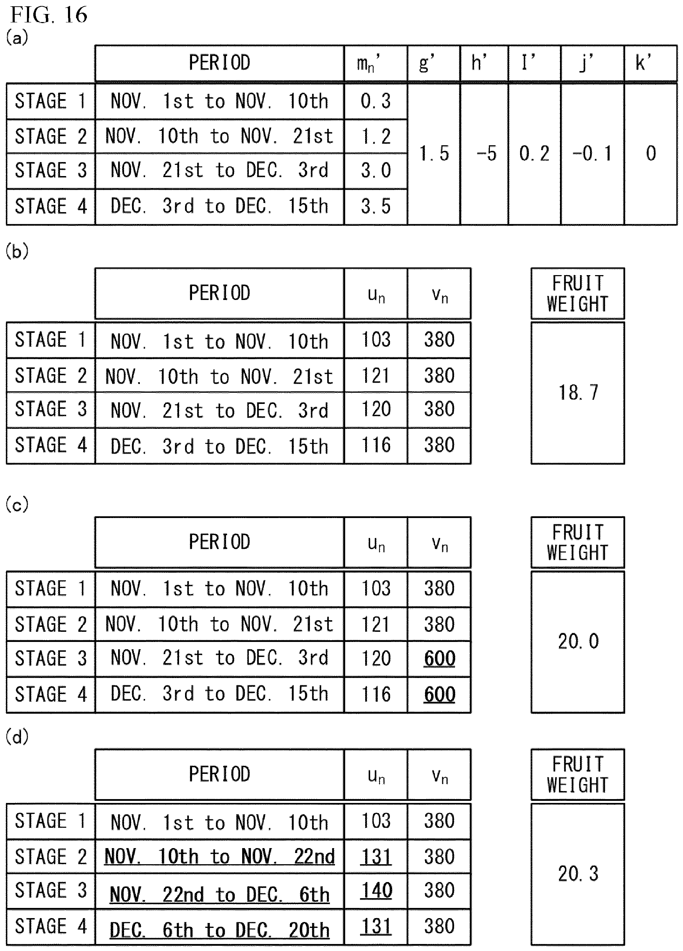

In the examples of FIGs. 14(a) to 14(e), when the fruit weight is to be adjusted, the parameters $m_n$', g', h', l', j', k' of the above equation (12) are assumed to be values as illustrated in FIG. 16(a). Further, by managing the leaf area index to be constant, {1-exp(-w·h)} in the above equation (12) is regarded as 1.

In this case, if the cumulative solar radiation amount $u_n$ and the average of the daily average carbon dioxide concentration $v_n$ of each stage before the adjustment by the adjusting unit 38 are values as illustrated in FIG. 16(b), the fruit weight is 18.7 as a result of the calculation of the above equation (12).

In contrast, assume that the producer inputs "20. 0 g" as the target fruit weight in the range D in FIG. 4, and inputs that the harvest date is not to be delayed. In this case, the adjusting unit 38 repeats step S72 in FIG. 9 to set the daily average carbon dioxide concentration in stages 3 and 4 to 600 ppm as illustrated in FIG. 16(c). As a result, the predicted weight of the fruits is consistent with the target weight of 20. 0 g. In this case, the outputting unit 40 outputs the information to the range E of the environmental control information display screen of FIG. 5 so that the daily average carbon dioxide concentration in the period from November 21 to December 15 is 600 ppm.

On the other hand, it is assumed that the producer inputs "20.0 g" as the target sugar content in the range D of FIG. 4 and inputs that the harvest date may be delayed to the seventh day. In this case, the adjusting unit 38 repeats step S78 in FIG. 9. As a result of this process, at the stage where the temperatures of stages 2 to 4 are lowered by a predetermined temperature, as illustrated in FIG. 16(d), the periods of stages 2 to 4 are changed, and accordingly, the cumulative solar radiation amount $u_2$ to $u_4$ are also changed, and the weight of the fruits becomes 20. 3 g. In this case, the outputting unit 40 outputs the information to the range E of the environmental control information display screen in FIG. 5 so as to lower the temperature in the period from November 10 to December 20.

As described above in detail, according to the present embodiment, the fruit information predicting unit 37 acquires the actual measurement values or the prediction values of the cumulative solar radiation amount and the daily average carbon dioxide concentration in each of the plurality of stages acquired by dividing the cultivation period of the fruit and vegetables. The fruit-information predicting unit 37 calculates the first indices ($\{g \cdot \ln(u_n)+h\} \cdot \{l \cdot \ln(v_n)+j\} \cdot \{1-\exp(-w \cdot h)\}$ and $\{g' \cdot \ln(u_n)+h'\} \cdot \{l' \cdot \ln(v_n)+j'\} \cdot \{1-\exp(-w \cdot h')\})$) relating to the sugar content and the fruit weight in each stage based on the cumulative solar radiation amount and the daily average carbon dioxide concentration in each of the plurality of stages. The fruit-information predicting unit 37 acquires values by integrating a product of the first index of each of the plurality of stages and the weighting coefficient $m_n$ or $m_n'$ determined for each variety of fruit vegetable and for each stage, and predicts the sugar content or the fruit weight based on the acquired values. Thus, the fruit information predicting unit 37 predicts the sugar content and the fruit weight based on the above equations (8) and (9) in consideration of the fact that the temperature sensitivity of the sugar content and the fruit weight varies from stage to stage, and therefore the sugar content and the fruit weight can be predicted with high accuracy.

In the present embodiment, the fruit-information predicting unit 37 calculates the first index ($\{g \cdot \ln(u_n)+h\} \cdot \{l \cdot \ln(v_n)+j\} \cdot \{1-\exp(-w \cdot h)\}$ or $\{g' \cdot \ln(u_n)+h'\} \cdot \{l' \cdot \ln(v_n)+j'\} \cdot \{1-\exp(-w \cdot h')\})$) based on the leaf area index (w) of fruit vegetables. Thus, the sugar content and the fruit weight can be accurately predicted in consideration of the photosynthetic characteristics of each seedling.

In the present embodiment, the stage period calculating unit 34 of the processing server 10 calculates the fruit temperature of the strawberry on and after the date of flowering, and calculates the periods T1 to T4 of the respective stages acquired by dividing the period from flowering to harvesting based on the fruit temperature. The cultivation period predicting unit 36 predicts the cultivation period by summing the periods T1 to T4 of the respective stages calculated by the stage period calculating unit 34. In the equation (equation (2)) by which the stage period calculating unit 34 calculates the periods T1 to T4 of the respective stages, the degree of contribution of the fruit temperature to the calculation result of the period of each stage is determined for each stage. Thus, in the present embodiment, the periods T1 to T4 of the respective stages can be accurately acquired in consideration of the temperature sensitivity of each stage. In addition, since the cultivation period and the harvest date are predicted by adding the periods T1 to T4 of the respective stages acquired with high accuracy, the cultivation period and the harvest date can be predicted with high accuracy.

In the present embodiment, the fruit temperature is estimated based on the temperature of the environment in which the fruit is cultivated and the solar radiation amount (see the above equation (1)). By estimating the fruit temperature in this way, it is not needed to actually measure the fruit temperature. In addition, by using the fruit temperature, it is possible to predict the period of each stage, the cultivation period, and the harvest date with higher accuracy than in a case where the temperature in the facility is simply used.

In the present embodiment, information (environmental control information) on the cultivation period, the cumulative solar radiation amount, and the daily average carbon dioxide concentration is specified and output so that the sugar content or the fruit weight predicted by the fruit information predicting unit 37 approaches the target value. This allows the producer to know how to control the environment to harvest the fruit having the target sugar content or fruit weight. In addition, in a case where the user terminal 70 controls a device that adjusts the cultivation environment, the cultivation environment can be automatically adjusted appropriately. By adjusting the cultivation environment to an appropriate cultivation environment in this way, it becomes possible to ship fruits with high profits, and therefore, the producer can trade strawberries at high prices and increase profits.

In addition, since the temperature sensitivity (parameters y k and $\delta$ k in equation (2), $m_n$ in equation (8), and $m_n'$ in equation (12)) are defined for each variety or crop, the period of each stage, the cultivation period, the harvest date, the sugar content, and the fruit weight can be predicted accurately regardless of variety or crop type.

The processing server 10 in the present embodiment outputs information on the harvest date predicted as described above (predicted harvest date) and environmental control information for making the sugar content and the fruit weight coincide with or approach target values to the user terminal 70. Thus, the producer who has viewed the adjustment information can appropriately adjust the cultivation environment based on the adjustment information.

In the above embodiment, the case where the producer manually inputs the date of flowering and the number of flowering into the input screen has been described, but it is not limited. For example, an image captured by a camera installed in the field or a camera provided in a moving device that moves in the field may be analyzed, and the date of flowering and the number of flowering may be automatically detected based on the analysis result. Thus, the producer can eliminate the work of walking around in the field to grasp the flowering date and the number of flowering and manually inputting the date and the number.

In the above embodiment, the case where the information of the range D is input at the stage when the screen of FIG. 4 is displayed has been described, but it is not limited, and the information of the range D of FIG. 4 may be input on the input screen of FIG. 3. In this case, the input field of "How many days do you want to delay?" in the range D of FIG. 4 may be changed to "By what month and what day do you want to harvest?" or the like.

In the above embodiment, the case where only one set of the date of flowering and the number of flowering is input on the input screen of FIG. 3 has been described, but it is not limited, and a plurality of sets of the date of flowering and the number of flowering may be input. When a plurality of pairs of the flowering date and the number of flowering are input, the sugar content and the fruit weight can be predicted and output for each flowering date. Further, it is possible to output environmental control information for adjusting the sugar content and the fruit weight corresponding to each flowering date to be within an appropriate range.

In the above-described embodiment, the prediction system 100 includes the mediation server 12, but it is not limited. That is, the mediation server 12 may be omitted, and the processing server 10 and the user terminal 70 may directly exchange information.

In the embodiment described above, the processing server 10 predicts the cultivation period, the harvest date, the sugar content, and the fruit weight of the strawberry, but it is not limited, and the cultivation period, the harvest date, the sugar content, and the fruit weight of other fruit vegetables (e.g., tomato) may be predicted.

The expressions given in the above embodiment are examples. The equation for calculating the fruit temperature may be an equation other than the above equation (1), and the equation for calculating the period Tk of each stage may be an equation other than the above equation (2) as long as the equation takes into account the temperature sensitivity of each stage. The equation for predicting the sugar content and the fruit weight may be an equation other than the above equations (8) and (12) as long as the equation takes into account the temperature sensitivity for each stage.

[Example]

Hereinafter, an example in which a sugar content prediction equation for predicting a sugar content (%) from a cumulative solar radiation amount (MJ) is derived for a strawberry variety "Kaorino" will be described.

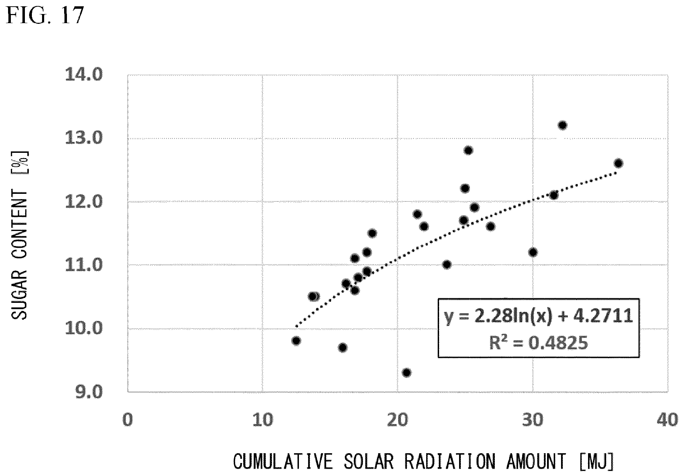

At demonstration base facility in the Tsukuba Plant Factory of the National Agriculture and Food Research Organization, the strawberry variety "Kaorino" was planted on September 18, 2021, and cultivated under the conditions of ventilation at 25 degrees Celsius. or higher and heating at 10 degrees Celsius or lower, and the matured fruits were harvested, and the sugar content was measured. Further, the relationship between the cumulative solar radiation amount (transmittance 35%) and the sugar content in the period from the cumulative temperature of 380 degrees Celsius to 475 degrees Celsius after flowering was plotted on the graph illustrated in FIG. 17, and a regression equation was derived.

From the graph of FIG. 17, the following regression equation (13) was derived, where the horizontal axis is x and the vertical axis is y.

$$y = 2.28 \times \ln(x) + 4.27 ... (13)$$

The graph of FIG. 17 differs for each variety. Therefore, if a graph similar to that of FIG. 17 is generated for each variety, a regression equation for each variety can be derived.

The regression equation of equation (13) corresponds to $\{g \cdot \ln(u) + h\} \cdot \{l \cdot \ln(v) + j\} \cdot \{1 - \exp(-w \cdot h)\}$ (that is, the first index) of equation (8).

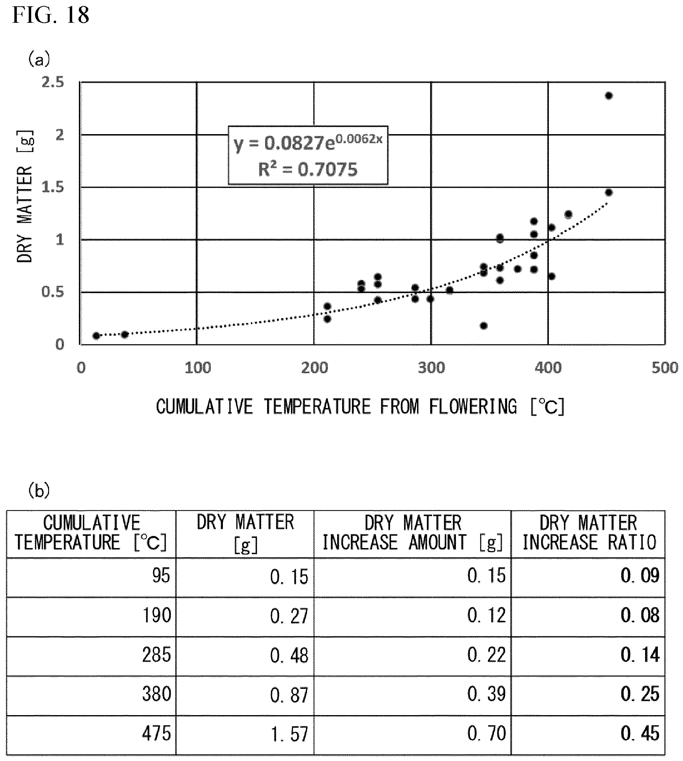

In addition, at demonstration base facility in the Tsukuba Plant Factory, the strawberry variety "Kaorino" was planted on September 30, 2022, and cultivated under the conditions of ventilation at 25 degrees Celsius. or higher and heating at 10 degrees Celsius or lower, and the fruit of the second flower of the top fruit cluster was harvested on December 15, 2022, and the dry matter content of the fruit was measured. The relationship between the cumulative temperature from flowering and the dry matter content of the fruit was plotted on the graph illustrated in FIG. 18(a), and a regression equation was derived.

Then, the ratio of increase in the amount of dry matter (dry matter increase ratio) for each cumulative temperature of 95 degrees Celsius was calculated from the regression equation of FIG. 18(a). FIG. 18(b) illustrates a table in which the dry matter amount, the dry matter increase amount, and the dry matter increase ratio for each cumulative temperature of 95 degrees Celsius are summarized. The dry matter increase is the value of the dry matter weight increased while the cumulative temperature increased by 95 degrees Celsius, and the dry matter increase ratio is the value acquired by dividing each dry matter increase by the total value of the dry matter increases (0.15+0.12+0.22+0.39+0.70). The total value of the dry matter increase ratios is 1.

In this example, the dry matter increase ratios were set to be the weighting coefficients $m_1$ to $m_5$ of the five stages divided for each cumulative temperature of 95 degrees Celsius, and the sugar content prediction equation (the following equation (14)) was acquired from the above equations (8) and (13).
[Number 1 Sugar content [5]=0.09×(2.28×In(cumulative solar radiation amount [MJ] from flowering to cumulative temperature of 95 degrees Celsius)+4.27)+0.08×(2.28×In(cumulative solar radiation amount [MJ] from cumulative temperature of 95 degrees Celsius to 190 degrees Celsius)+4.27) +0.14×(2.28×In(cumulative solar radiation amount [MJ] from cumulative temperature of 190 degrees Celsius to 285 degrees Celsius)+4.27)     (14)
+0.25×(2.28×In(cumulative solar radiation amount [MJ] from cumulative temperature of 285 degrees Celsius to 380 degrees Celsius)+4.27) +0.45×(2.28×In(cumulative solar radiation amount [MJ] from cumulative temperature of 380 degrees Celsius to 475 degrees Celsius)+4.27)

In the present embodiment, the sugar content is predicted by substituting the measured value or the predicted value of the cumulative solar radiation amount in each stage into equation (14). In the present embodiment, the adjusting unit 38 also specifies the environmental control information (adjustment information of at least one of the cultivation period and the cumulative solar radiation amount) for causing the prediction result to be included in the target range (to approach the target value). The outputting unit 40 outputs the environmental information specified by the adjusting unit 38 to the user terminal 70 via the mediation server 12.

The graph of FIG. 18(a) varies depending on the variety. Therefore, if a graph similar to that of FIG. 18(a) is generated for each variety, the weight coefficient of each variety can be derived for each stage.

The processing functions described above can be implemented by a computer. In this case, a program describing the processing contents of the functions to be included in the processing apparatus is provided. The program is executed by the computer, and thus the processing functions are realized on the computer. The program describing the processing contents may be recorded in a computer-readable storage medium (excluding a carrier wave).

When the program is distributed, for example, the program is sold in a form of a portable storage medium such as a digital versatile disc (DVD) or a compact disc read only memory (CD-ROM) in which the program is recorded. The program may be stored in a storage device of a server computer, and the program may be transferred from the server computer to another computer via a network.

A computer that executes the program stores the program recorded in a portable storage medium or the program transferred from the server computer in its own storage device, for example. The computer reads the program from the storage device and executes processing according to the program. The computer may read the program directly from the portable storage medium and execute the processing according to the program. Further, the computer can also sequentially execute processing according to the received program each time the program is transferred from the server computer.

While the exemplary embodiments of the present invention have been illustrated in detail, the present invention is not limited to the above-mentioned embodiments, and other embodiments, variations and variations may be made without departing from the scope of the present invention.

[Description of Symbols]

10 processing server
12 mediation server
30 information receiving unit
32 environmental information acquiring unit
34 stage period calculating unit
36 cultivation period predicting unit
37 fruit information predicting unit
38 adjusting unit
40 outputting unit
50 environmental information DB
52 parameter table
70 user terminal
90 CPU (computer)
100 prediction system

**Claims**

1.  A prediction method, implemented by a computer, **characterized by** comprising:

acquiring actual measurement values or prediction values of a cumulative solar radiation amount and a daily average carbon dioxide concentration in each of a plurality of stages acquired by dividing a cultivation period from flowering to a time when a fruit is able to be harvested in a fruit vegetable;

calculating a first index related to a sugar content or a weight of the fruit in each of the plurality of stages, based on the cumulative solar radiation amount and the daily average carbon dioxide concentration in each of the plurality of stages; and

predicting the sugar content or the weight of the fruit based on a value acquired by integrating a product of the first index of each of the plurality of stages and a weight coefficient determined for each variety of the fruit vegetable and for each of the stages.

2. The prediction method according to claim 1, **characterized in that** the first index is calculated based on a leaf area index of the fruit vegetable.

3. The prediction method according to claim 1, further comprising predicting the cultivation period, implemented by computer,

**characterized in that** the predicting includes acquiring or estimating a fruit temperature that is a temperature of a fruit surface of the fruit vegetable after the flowering, calculating a period of each of the plurality of stages based on the fruit temperature, and predicting the cultivation period by summing calculated periods of the plurality of stages, and

when the period of each of the plurality of stages is calculated, a contribution degree of the fruit temperature to a calculation result of the period of each of the plurality of stages is determined for each of the stages.

4. The prediction method according to claim 3, **characterized in that** the fruit temperature is estimated based on temperature and solar radiation amount of an environment in which the fruit is cultivated.

5. An environmental control information output method, implemented by a computer, **characterized by** comprising:

acquiring a prediction result of the sugar content or weight of the fruit predicted by using the prediction method according to any one of claims 1 to 4; and

adjusting at least one of the cultivation period, the cumulative solar radiation amount, and the daily average carbon dioxide concentration such that the prediction result falls within a target range, and outputting adjusted information.

6. A prediction program, implemented by a computer, **characterized by** comprising:

acquiring actual measurement values or prediction values of a cumulative solar radiation amount and a daily average carbon dioxide concentration in each of a plurality of stages acquired by dividing a cultivation period from flowering to a time when a fruit is able to be harvested in a fruit vegetable;

calculating a first index related to a sugar content or a weight of the fruit in each of the plurality of stages, based on the cumulative solar radiation amount and the daily average carbon dioxide concentration in each of the plurality of stages; and

predicting the sugar content or the weight of the fruit based on a value acquired by integrating a product of the first index of each of the plurality of stages and a weight coefficient determined for each variety of the fruit vegetable and for each of the stages.

7. An environmental control information output program, implemented by a computer, **characterized by** comprising:

acquiring actual measurement values or prediction values of a cumulative solar radiation amount and a daily average carbon dioxide concentration in each of a plurality of stages acquired by dividing a cultivation period from flowering to a time when a fruit is able to be harvested in a fruit vegetable;

calculating a first index related to a sugar content or a weight of the fruit in each of the plurality of stages, based on the cumulative solar radiation amount and the daily average carbon dioxide concentration in each of the plurality of stages;

predicting the sugar content or the weight of the fruit based on a value acquired by integrating a product of the first index of each of the plurality of stages and a weight coefficient determined for each variety of the fruit vegetable and for each of the stages; and

adjusting at least one of the cultivation period, the cumulative solar radiation amount, and the daily average carbon dioxide concentration such that the prediction result falls within a target range, and outputting adjusted information.

8. A prediction method, implemented by a computer, **characterized by** comprising:

acquiring actual measurement values or prediction values of a cumulative solar radiation amount in each of a plurality of stages acquired by dividing a cultivation period from flowering to a time when a fruit is able to be harvested in a fruit vegetable;

calculating a first index related to a sugar content of the fruit in each of the plurality of stages, based on the cumulative solar radiation amount in each of the plurality of stages; and

predicting the sugar content of the fruit based on a value acquired by integrating a product of the first index of each of the plurality of stages and a weight coefficient determined for each variety of the fruit vegetable and for each of the stages.

9. The prediction method according to claim 8, **characterized in that** the weight coefficient is determined based on an increase in dry matter of the fruit vegetable in each of the plurality of stages.

10. An environmental control information output method, implemented by a computer, **characterized by** comprising:

acquiring a prediction result of the sugar content of the fruit predicted by using the prediction method according to claim 8 or 9; and

adjusting at least one of the cultivation period and the cumulative solar radiation amount such that the prediction result falls within a target range, and outputting adjusted information.

FIG. 1

FIG. 2

(a)

(b)

FIG. 3

<INPUT SCREEN>

| | |
|---|---|
| ITEM | |

| | | | |
|---|---|---|---|
| VARIETY | | FIELD | |

HEATING    START   [ MM/DD ]     END   [ MM/DD ]

SIDE WINDOW    OPEN   [ MM/DD ]     CLOSE   [ MM/DD ]

RANGE A

FLOWERING DATE     FLOWERING NUMBER

[ MM/DD ]     [ X ]

RANGE B

FIG. 4

<PREDICTION RESULT DISPLAY SCREEN>

ITEM

VARIETY                    FIELD

HEATING    START  MM/DD        END    MM/DD

SIDE
WINDOW     OPEN   MM/DD        CLOSE  MM/DD

} RANGE A

PREDICTION RESULT

| HARVEST DATE | NUMBER | SUGAR CONTENT | FRUIT WEIGHT |
|---|---|---|---|
| MM/DD | X | X degrees | X g |

} RANGE C

ADJUST SUGAR CONTENT OR FRUIT WIGHT?

☑ YES          ☐ NO

TARGET SUGAR
CONTENT          X degrees

TARGET FRUIT
WEIGHT

MAY DELAY HARVEST DATE?

☑ YES          ☐ NO

HOW MANY DELAYED DAYS?

X DAYS

SEND

} RANGE D

FIG. 5

<ENVIRONMENTAL CONTROL INFORMATION DISPLAY SCREEN>

FIG. 6

FIG. 7

```
                    ┌──────────────┐
                    │    START     │
                    └──────┬───────┘
                           │
          ┌────────────────┤
          │                ▼                         S10
          │         ╱──────────────╲
        N │        ╱  INFORMATION    ╲
          └───────┤ INPUT FROM MEDIATION ├
                   ╲     SERVER?     ╱
                    ╲──────────────╱
                           │ Y                        S12
                           ▼
              ┌──────────────────────────┐
              │  ACQUIRE INPUT INFORMATION │
              └──────────────┬───────────┘
                             │                        S14
                             ▼
          ┌──────────────────────────────────┐
          │ PREDICTING PROCESS OF CULTIVATION  │
          │    PERIOD AND HARVEST DATE         │
          └──────────────┬───────────────────┘
                         │
                         ▼                   S16
              ┌──────────────────────────┐
              │  PREDICT SUGAR CONTENT OF  │
              │  FRUIT AND FRUIT WEIGHT    │
              └──────────────┬───────────┘
                             │                 S18
                             ▼
      ┌──────────────────────────────────────────┐
      │ DISPLAY PREDICTED HARVEST DATE, SUGAR      │
      │ CONTENT OF FRUIT, AND FRUIT WEIGHT         │
      └──────────────────┬───────────────────────┘
                         │
        ┌────────────────┤
        │                ▼                          S20
        │         ╱──────────────╲
      N │        ╱  INFORMATION    ╲
        └───────┤ INPUT FROM MEDIATION ├
                 ╲     SERVER?     ╱
                  ╲──────────────╱
                         │ Y                          S22
                         ▼
            ┌──────────────────────────┐
            │  ACQUIRE INPUT INFORMATION │
            └──────────────┬───────────┘
                           │                          S24
                           ▼
          ┌────────────────────────────╲
        N ╱      NEED TO                 ╲
      ┌──┤ ADJUST SUGAR CONTENT OR        ├
      │   ╲      FRUIT WEIGHT?           ╱
      │    ╲──────────────────────────╱
      │                  │ Y                           S26
      │                  ▼
      │   ┌──────────────────────────────────┐
      │   │   SPECIFYING PROCESS OF           │
      │   │ ENVIRONMENTAL CONTROL INFORMATION │
      │   └──────────────┬───────────────────┘
      │                  │                             S28
      │                  ▼
      │     ┌──────────────────────────┐
      │     │ DISPLAY ENVIRONMENTAL      │
      │     │ CONTROL INFORMATION        │
      │     └──────────────┬───────────┘
      │                    │
      └────────────────────┤
                           ▼
                    ┌──────────────┐
                    │     END      │
                    └──────────────┘
```

FIG. 8

S14

START

ACQUIRE NEEDED ENVIRONMENTAL
INFORMATION AND ESTIMATE
CULTIVATION ENVIRONMENT — S50

ACQUIRE PARAMETERS — S52

CALCULATE FRUIT
TEMPERATURE ON EACH DAY — S54

CALCULATE PERIOD OF EACH STAGE — S56

PREDICT CULTIVATION
PERIOD AND HARVEST DATE — S58

RETURN

FIG. 9

S26

```
                        ┌─────────┐
                        │  START  │
                        └────┬────┘
                             │
        ┌────────────────────┼──────────────────────────────────┐
        │              S70   ▼                                   │
        │         ◇─────────────────────◇                        │
        │        ╱    MAY DELAY           ╲         Y            │
        │       ◇    HARVEST DATE?          ◇──────────┐         │
        │        ╲                         ╱           │         │
        │         ◇─────────────────────◇             │         │
        │               N │        S72                │         │
        │                 ▼                           ▼   S78   │
   │    │  ┌──────────────────────────┐      ┌──────────────────────┐
   │    │  │ ADJUST DAILY AVERAGE CARBON│      │ ADJUST FRUIT TEMPERATURE│
   │    │  │  DIOXIDE CONCENTRATION    │      └───────────┬──────────┘
   │    │  └────────────┬─────────────┘                  │    S80
   │    │          S74  ▼                                ▼
   │    │  ┌──────────────────────────┐      ┌──────────────────────────┐
   │    │  │ PREDICT SUGAR CONTENT AND │      │ PREDICT STAGE PERIOD AND HARVEST│
   │    │  │  FRUIT WEIGHT AGAIN       │      │ DATE AGAIN, AND PREDICT SUGAR   │
   │    │  └────────────┬─────────────┘      │ CONTENT AND FRUIT WEIGHT AGAIN  │
   │    │          S76  ▼                    └───────────┬─────────────┘
   │   N◇─────────────────────◇                    S82   ▼
   └────◇   REACH TARGET       ◇           ◇─────────────────────◇  N
        ◇     VALUE?          ◇           ◇  REACH TARGET        ◇──┘
         ◇─────────────────────◇           ◇    VALUE?          ◇
               Y │                          ◇─────────────────────◇
                 ▼                                │ Y
                 ◄────────────────────────────────┘
                 ▼
           ┌──────────┐
           │  RETURN  │
           └──────────┘
```

FIG. 10

FLOWERING
DATE

RIPE DATE
(HARVEST DATE)

| STAGE s1 | STAGE s2 | · · · | STAGE sn |

DAILY AVERAGE
FRUIT TEMPERATURE $t1$ $t2$ $tn$

THRESHOLD $CTt1$ $CTt2$ $CTtn$

FIG. 11

...

## FIG. 12

(a)

(b)

FIG. 13

(a)

(b)

## FIG. 14

(a)

| FLOWERING<br>DATE | FLOWERING<br>NUMBER | |
|---|---|---|
| NOV. 1st | 500 | } RANGE B |

(b)

| | FRUIT<br>TEMPERATURE |
|---|---|
| NOV. 1st | 16℃ |
| NOV. 2nd | 16℃ |
| ... | ... |
| DEC. 23th | 13℃ |
| DEC. 24th | 13℃ |

⇒

(c)

| | DAILY AVERAGE<br>FRUIT<br>TEMPERATURE |
|---|---|
| t1 | 15.6 |
| t2 | 14.5 |
| t3 | 13.8 |
| t4 | 13 |

(d)

| EQUATION OF Tk | Tk |
|---|---|
| T1=150/(0.15×15.6+15) | 9 DAYS |
| T2=150/(0.6×14.5+5) | 11 DAYS |
| T3=150/(0.9×13.8+0) | 12 DAYS |
| T4=150/(1.0×13+0) | 12 DAYS |

(e)

| CULTIVATION<br>PERIOD=T1+T2+T3+T4 | 44 DAYS |
|---|---|
| HARVEST DATE=NOV.<br>1st+44 DAYS | DEC. 15th |

FIG. 15

(a)

| | PERIOD | | $m_n$ | g | h | i | j | k |
|---|---|---|---|---|---|---|---|---|
| STAGE 1 | NOV. 1st to NOV. 10th | | 0.2 | | | | | |
| STAGE 2 | NOV. 10th to NOV. 21st | | 0.6 | 1.5 | −5 | 0.2 | −0.1 | 0 |
| STAGE 3 | NOV. 21st to DEC. 3rd | | 1.6 | | | | | |
| STAGE 4 | DEC. 3rd to DEC. 15th | | 2.0 | | | | | |

(b)

| | PERIOD | | $u_n$ | $v_n$ |
|---|---|---|---|---|
| STAGE 1 | NOV. 1st to NOV. 10th | | 103 | 380 |
| STAGE 2 | NOV. 10th to NOV. 21st | | 121 | 380 |
| STAGE 3 | NOV. 21st to DEC. 3rd | | 120 | 380 |
| STAGE 4 | DEC. 3rd to DEC. 15th | | 116 | 380 |

| SUGAR CONTENT |
|---|
| 10.2 |

(c)

| | PERIOD | | $u_n$ | $v_n$ |
|---|---|---|---|---|
| STAGE 1 | NOV. 1st to NOV. 10th | | 103 | 380 |
| STAGE 2 | NOV. 10th to NOV. 21st | | 121 | 380 |
| STAGE 3 | NOV. 21st to DEC. 3rd | | 120 | 600 |
| STAGE 4 | DEC. 3rd to DEC. 15th | | 116 | 600 |

| SUGAR CONTENT |
|---|
| 11.0 |

(d)

| | PERIOD | | $u_n$ | $v_n$ |
|---|---|---|---|---|
| STAGE 1 | NOV. 1st to NOV. 10th | | 103 | 380 |
| STAGE 2 | NOV. 10th to NOV. 22nd | | 131 | 380 |
| STAGE 3 | NOV. 22nd to DEC. 6th | | 140 | 380 |
| STAGE 4 | DEC. 6th to DEC. 20th | | 131 | 380 |

| SUGAR CONTENT |
|---|
| 11.1 |

FIG. 16

(a)

| | PERIOD | $m_n'$ | g' | h' | I' | j' | k' |
|---|---|---|---|---|---|---|---|
| STAGE 1 | NOV. 1st to NOV. 10th | 0.3 | | | | | |
| STAGE 2 | NOV. 10th to NOV. 21st | 1.2 | 1.5 | −5 | 0.2 | −0.1 | 0 |
| STAGE 3 | NOV. 21st to DEC. 3rd | 3.0 | | | | | |
| STAGE 4 | DEC. 3rd to DEC. 15th | 3.5 | | | | | |

(b)

| | PERIOD | $u_n$ | $v_n$ |
|---|---|---|---|
| STAGE 1 | NOV. 1st to NOV. 10th | 103 | 380 |
| STAGE 2 | NOV. 10th to NOV. 21st | 121 | 380 |
| STAGE 3 | NOV. 21st to DEC. 3rd | 120 | 380 |
| STAGE 4 | DEC. 3rd to DEC. 15th | 116 | 380 |

| FRUIT WEIGHT |
|---|
| 18.7 |

(c)

| | PERIOD | $u_n$ | $v_n$ |
|---|---|---|---|
| STAGE 1 | NOV. 1st to NOV. 10th | 103 | 380 |
| STAGE 2 | NOV. 10th to NOV. 21st | 121 | 380 |
| STAGE 3 | NOV. 21st to DEC. 3rd | 120 | 600 |
| STAGE 4 | DEC. 3rd to DEC. 15th | 116 | 600 |

| FRUIT WEIGHT |
|---|
| 20.0 |

(d)

| | PERIOD | $u_n$ | $v_n$ |
|---|---|---|---|
| STAGE 1 | NOV. 1st to NOV. 10th | 103 | 380 |
| STAGE 2 | NOV. 10th to NOV. 22nd | 131 | 380 |
| STAGE 3 | NOV. 22nd to DEC. 6th | 140 | 380 |
| STAGE 4 | DEC. 6th to DEC. 20th | 131 | 380 |

| FRUIT WEIGHT |
|---|
| 20.3 |

FIG. 17

FIG. 18

(a)

CUMULATIVE TEMPERATURE FROM FLOWERING [°C]

(b)

| CUMULATIVE TEMPERATURE [°C] | DRY MATTER [g] | DRY MATTER INCREASE AMOUNT [g] | DRY MATTER INCREASE RATIO |
|---|---|---|---|
| 95 | 0. 15 | 0. 15 | 0. 09 |
| 190 | 0. 27 | 0. 12 | 0. 08 |
| 285 | 0. 48 | 0. 22 | 0. 14 |
| 380 | 0. 87 | 0. 39 | 0. 25 |
| 475 | 1. 57 | 0. 70 | 0. 45 |

## INTERNATIONAL SEARCH REPORT

| International application No. |
|---|
| **PCT/JP2023/027644** |

| A. | CLASSIFICATION OF SUBJECT MATTER |
|---|---|

*G06Q 50/02*(2012.01)i; *A01G 7/00*(2006.01)i; *G06Q 10/04*(2023.01)i
FI:　A01G7/00 603; G06Q10/04; G06Q50/02

According to International Patent Classification (IPC) or to both national classification and IPC

| B. | FIELDS SEARCHED |
|---|---|

Minimum documentation searched (classification system followed by classification symbols)

　　G06Q50/02; A01G7/00; G06Q10/04

Documentation searched other than minimum documentation to the extent that such documents are included in the fields searched

　　Published examined utility model applications of Japan 1922-1996
　　Published unexamined utility model applications of Japan 1971-2023
　　Registered utility model specifications of Japan 1996-2023
　　Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-48551 A (NAT AGRICULTURE & FOOD RES ORG) 02 April 2020 (2020-04-02) paragraphs [0022]-[0054] | 1-10 |
| A | JP 2017-51125 A (UNIV SAITAMA) 16 March 2017 (2017-03-16) paragraphs [0020]-[0119] | 1-10 |
| A | JP 2020-53038 A (NAT AGRICULTURE & FOOD RES ORG) 02 April 2020 (2020-04-02) paragraphs [0025]-[0030] | 1-10 |
| A | JP 2019-176766 A (HIROSHIMA PREFECTURE) 17 October 2019 (2019-10-17) paragraphs [0027]-[0073] | 1-10 |
| A | 石上清, 根域を制限した循環式養液栽培装置による高糖度トマトの生産, 静岡県農業試験場研究報告, February 1994, vol. 38, pp. 61-72 pp. 69-70, (ISHIGAMI, Kiyoshi. Production of a high saccharic tomato by circulation type nutriculture device limiting its rhizosphere. Bulletin of Shizuoka Agricultural Experiment Station.) | 1-10 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 August 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/027644**

| Patent document cited in search report | | | Publication date (day/month/year) | Patent family member(s) | Publication date (day/month/year) |
|---|---|---|---|---|---|
| JP | 2020-48551 | A | 02 April 2020 | (Family: none) | |
| JP | 2017-51125 | A | 16 March 2017 | (Family: none) | |
| JP | 2020-53038 | A | 02 April 2020 | (Family: none) | |
| JP | 2019-176766 | A | 17 October 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008054573 A
- JP 2018038322 A
- JP 2020048551 A